## Europäisches Patentamt
## European Patent Office
## Office européen des brevets

(19)

(11) Veröffentlichungsnummer: **0 212 102 B1**

(12)

# EUROPÄISCHE PATENTSCHRIFT

(45) Veröffentlichungstag der Patentschrift:
02.08.89

(51) Int. Cl.⁴: **D06P 3/00**

(21) Anmeldenummer: 86107583.6

(22) Anmeldetag: 04.06.86

(54) Verfahren zum Färben von Ledern unter Verwendung wasserlöslicher, kationischer Polymeren.

(30) Priorität: 27.08.85 DE 3530478

(43) Veröffentlichungstag der Anmeldung:
04.03.87 Patentblatt 87/10

(45) Bekanntmachung des Hinweises auf die Patenterteilung:
02.08.89 Patentblatt 89/31

(84) Benannte Vertragsstaaten:
AT BE CH DE FR GB IT LI LU NL SE

(56) Entgegenhaltungen:
EP-A- 0 175 202
FR-A- 2 308 663
LU-A- 81 945
US-A- 3 406 139
US-A- 4 526 935

(73) Patentinhaber: Benckiser-Knapsack GmbH, Dr. Albert-Reimann-Strasse 2, D-6802 Ladenburg(DE)

(72) Erfinder: Schmidt, Rudolf, Wonnegaustrasse 7, D-6520 Worms 28(DE)
Erfinder: Kleemann, Stephan, Dr., Mozartstrasse 25, D-6905 Schriesheim(DE)
Erfinder: Wahl, Fritz, Im Wirbel 61, D-6800 Mannheim-Rheinau(DE)

(74) Vertreter: Zellentin, Wiger et al, Patentanwälte Dr. rer. nat. Rüdiger Zellentin Dipl.-Ing. Wiger Zellentin Rubensstrasse 30, D-6700 Ludwigshafen(DE)

## Beschreibung

Die Hauptgerbung von diversem Hautmaterial kann mit unterschiedlichen Gerbmaterialien bewerkstelligt werden, wobei die Leder zwangsläufig einen anionischen oder kationischen Ladungscharakter annehmen, der sich nach der Ladung des verwendeten Gerbstoffes richtet. Vorwiegend werden mineralische Gerbstoffe, wie z.B. basische Chromsulfate, verwendet, bei denen vorerst ein kationisches Leder resultiert. Mit einer Hauptgerbung alleine kann jedoch in den seltensten Fällen eine bestimmte geforderte Lederqualität erreicht werden.

Daher ergibt sich die Notwendigkeit von weiteren zusätzlichen Gerbungen, die man allgemein als Nachgerbung bezeichnet, mit denen ganz bestimmte optische und/oder andere sensorische Eigenschaften erzielt werden. Die hierfür verwendeten Nachgerbemittel sind vorwiegend anionischer Natur und laden nun das aus der Hauptgerbung kationisch geladene Leder mehr oder weniger anionisch um. Nachdem diese Gerbstufen mit den damit programmierten Ledereigenschaften abgeschlossen sind, werden die größten Anteile solcher Leder noch im nassen Zustand im Faß gefärbt. Besonders für die Herstellung hochwertiger Produkte, wie z.B. die sogenannten Anilinleder, ist es von allergrößter Wichtigkeit, daß der Folgeprozeß der Färbung optisch einwandfreie, gleichmäßige Färbungen erbringt und durch eventuell mitverwendete Färbereihilfsmittel keinerlei Veränderungen der Ledereigenschaften hervorgerufen werden. Es ist daher verständlicherweise nicht an Versuchen gefehlt, Färbereihilfsmittel zu entwickeln, die diesen beiden Hauptansprüchen gerecht werden können, wobei man auch kostspielige Synthesen von geeignet erscheinenden Substanzen nicht gescheut hat.

Da die meisten Lederfarbstoffe anionisch sind, erfolgt bei der Färbung von anionischen Ledern eine gute Farbstoffverteilung, weil der gleiche Ladungszustand ein zu schnelles und damit ungleichmäßiges Anfallen des Farbstoffes an die Lederoberfläche verhindert. Gleichzeitig wird aber auch ein stärkeres Eindringen des Farbstoffes in das Innere der feinen bis feinsten Fasern bewirkt, wodurch die visuell in Erscheinung tretende Lederoberfläche farbärmer, also aufgehellt erscheint.

Die Färbungen sind deshalb in der Regel relativ egal, jedoch nicht intensiv genug. Ein Mehreinsatz von Farbstoffen könnte dies zum Teil ausgleichen, jedoch sind Farbstoffe sehr teuer und die Bindungsstellen für die Farbstoffe begrenzt. Zusätzliche Bindungsstellen im Leder können geschaffen werden, indem man das amphotere Ledersystem ansäuert und somit kationisiert. Dies geschieht in der Regel durch Zusatz von Säure, aus bestimmten Gründen vorzugsweise mit Ameisensäure. Abgesehen davon, daß auch hiermit die nötigen Farbstoffmengen nicht befriedigend fixiert werden können, ergibt sich insbesondere bei der Färbung von Chromledern der enorme Nachteil, daß Ameisensäure wieder Chrombestandteile aus dem Leder löst, und dadurch die Flotten und Abwässer in nicht gestatteter Weise mit Chrom belastet.

Ein kationisches Färbereihilfsmittel muß also zusätzlich so starke Ladungsverschiebungen bewirken können, daß auf die Kationisierung mittels Ameisensäure völlig oder zumindest weitgehend verzichtet werden kann. Weiterhin muß gewährleistet sein, daß bei der sehr starken kationischen Ladung des behandelten Leders der anionische Farbstoff zwar sehr konzentriert, aber gleichmäßig an der Oberfläche anfällt, so daß eine sehr gute Egalität resultiert. Des weiteren sollte dies aus wirtschaftlichen Gründen schon mit geringen Mengen eines solchen Hilfsmittels zu erreichen sein.

Darüber hinaus wäre von großer Wichtigkeit, daß bei der Färbung von kationisierten Ledern in Relation zu nicht behandelten Ledern eine deutliche Ersparnis teurer Farbstoffe zu verzeichnen ist.

Überraschungsweise kann man diesen an sich fast widersprüchlichen Anforderungen durch eine Behandlung mit bestimmten wasserlöslichen Polymeren gemäß der EP-A-175 202 gerecht werden. Bevorzugt sind Polymere dieser Art, die sich durch einen K-Wert von 20–45 auszeichnen.

Das neue Verfahren zum Färben von Ledern ist dadurch gekennzeichnet, daß die zu färbenden Leder vor, und/oder während, und/oder nach der Färbung mit Polyamidaminen behandelt werden, welche durch Kondensation von Polyacrylnitril oder Polyacrylnitrilcopolymerisaten aus mindestens 20% Acrylnitril und bis zum 80% eines Acrylsäurederivates oder einer copolymerisierbaren Vinylverbindung mit einem oder mehreren Polyaminen in Gegenwart eines schwefelhaltigen Katalysators bei Temperaturen von 100–160°C, wobei man die Umsetzung in Gegenwart eines Alkohols oder Polyols mit einem Siedepunkt von über 95°C durchführt und das Reaktionsprodukt anschließend mit Wasser oder mit einem Gemisch aus Wasser und einem mit Wasser mischbaren organischen Lösemittel bei Temperaturen von 70–100°C behandelt, erhältlich sind.

Aus den obigen Gründen entfällt die Verwendung einer ganzen Reihe marktüblicher kationischer Substanzen, hauptsächlich wegen der resultierenden, unegalen Färbungen. Speziell für die Lederfärbung konzipierte Hilfsmittel sind zwar geeigneter, weisen aber immer noch zum Teil erhebliche Mangelerscheinungen auf, so daß eine Weiterentwicklung bzw. Verbesserung erforderlich erscheint.

In der DE-A 2 552 750 wird die Vorbehandlung von zu färbenden Ledern mit Polyaminharzen empfohlen, die jedoch besondere Konditionierungen der Leder nach einer solchen Behandlung erforderlich machen und dadurch in einem pH-Bereich durchgeführt werden müssen, der für bestimmte Lederqualitäten, wie z.B. die Festnarbigkeit, abträglich ist. Durch die dort beschriebene Abhebung des pH-Wertes wird das amphotere Ledersystem wieder anionischer geladen, so daß zwar eine gewisse Farbegalität auch ohne die Vewendung von Färbereihilfsmitteln erreicht wird, die alledings mit den schon beschriebenen, negativen Aufhellungen der Farbe einhergeht.

Die beschriebenen Polyamine müssen aus an sich anderweitig verwertbaren Vorprodukten aufgebaut werden, so daß bei deren Herstellung ein bedeutender Kostenfaktor in Erscheinung tritt. Bei der Anwendung wird eine wesentlich höhere Einsatzmenge an Wirkstoff gegenüber den erfindungsgemäß beanspruchten Polyamidaminen benötigt. Wie in DE-A 2 552 750 beschrieben, reicht bei gleicher Farbintensität die Hälfte des Farbstoffes gegenüber unbehandelten Leder aus, bei der erfindungsgemäßen Anwendung von Polyamidaminen hingegen reicht trotz der verringerten Einsatzmenge ein Fünftel der Farbstoffmenge für die gleiche Farbintensität aus. Außerdem muß gemäß DE-A 2 552 750 mit großen Mengen Ameisensäure nachfixiert werden.

In der DE-A 2 539 671 wird die Synthese und Anwendung von Polyglykolether-aminen beschrieben, durch deren Einsatz verhindert werden soll, daß sich Mischfarbstoffe beim Färbeprozeß auftrennen. Um eine Farbvertiefung zu bewirken, sind hierzu die 5–10fache Menge Wirkstoff gegenüber den erfindungsgemäß angewendeten Polyamidaminen notwendig. Auch hier werden zur Fixierung zusätzlich erhebliche Mengen Ameisensäure benötigt.

In der Schweizer Patentschrift 1598/69 sind speziell synthetisierte, für die Ledergerbung und Färbung geeignete Polyamine beschrieben. Die Anwendung dieser Polyamine ist offensichtlich auch nicht unkritisch, da die verwendeten Farbstoffe entweder praxisunüblich stark verdünnt (1:50) zugegeben werden müssen, oder aber die Kationisierung des Leders erfolgt trotz 2,5 bis 25fachem Mengeneinsatz gegenüber den erfindungsgemäß angewendeten Polyamidaminen in nicht ausreichender Weise, so daß auch hier eine weitere Kationisierung des Leders mittels hoher Mengen Ameisensäure mit den bekannten, damit verbundenen Nachteilen bewerkstelligt werden muß.

In der DE-A 3 201 226 werden Carboxylgruppen- und Aminogruppen-haltige Polymergerbstoffe beschrieben, die als Nachgerbemittel eingesetzt werden, wobei die Veränderung des Ledercharakters deutlich im Vordergrund steht. Diesen Hilfsmitteln werden lediglich eine mehr oder weniger deutliche farbvertiefende Wirkung zugestanden, wobei auch hier erheblich größere Mengen Wirkstoff bzw. Feststoff als bei erfindungsgemäß angewendeten Polyamidaminen verwendet werden müssen.

Die erfindungsgemäß anwendbaren Polyamidamine können in einfacher Weise synthetisiert werden, wobei preiswerte, teilweise als Abfallprodukte anfallende Ausgangsprodukte verwendet werden. Entsprechende Produkte lassen sich in Abwandlung der in der DE-A 2 948 795 sowie den US-A 3 406 139 und US-A 3 647 769 beschriebenen Verfahrens, wonach Polyacrylnitril mit einem Polyamin in Gegenwart eines schwefelhaltigen Katalysators umgesetzt wird und ein Polymeres erhalten wird, welches Amid-, Imidazolin- und Tetrahydropyrimidingruppen aufweist, herstellen, indem man durch Zusatz von 0,5–10 Moläquivalenten eines hoch siedenden Alkohols bzw. Polyols, pro Moläquivalent an Nitrilgruppen des Ausgangspolymerisates, in kurzer Zeit unter relativ milden Bedingungen ein gut wasserlösliches Aminpolymerisat mit definierter Kettenlänge herstellt. Dieses enthält dadurch zusätzlich zu den vorgenannten basischen Gruppen noch durch die Spaltung von ursprünglich gebildeten Amidineinheiten Imidoester-, Ester- und Carboxylatgruppen. Die Herstellung solcher Produkte und ihre Verwendung als Flockungsmittel und Entwässerungsbeschleuniger in der Papierindustrie ist Gegenstand der älteren EP-A 175 202, deren wesentliche Teile im folgenden referiert werden.

Die in Gegenwart von beispielsweise Ethylenglykol hergestellten Aminopolymerisate weisen allgemein eine homogen wirkende farbvertiefende Wirkung bei der Behandlung anionisch nachbehandelter Leder auf.

Das als erster Bestandteil zur Herstellung der Aminopolymerisate verwendete Nitrilpolymerisat a) besteht aus Polyacrylnitril oder einem Copolymerisat, das aus wenigstens 20 Mol.-% Acrylnitrilmonomeren und aus Acrylsäure, Alkylacrylat, Methacrylsäure, Alkylmethacrylat, Methacrylnitril, Acrylamid, N-Alkylacrylamid, N-Hydroxyalkylacrylamid, N,N-Dialkylacrylamid, N,N-Bis(hydroxyalkyl)acrylamid, Methacrylamid, N-Alkylmethacrylamid, N-Hydroxyalkylmethacrylamid, N,N-Dialkylmethacrylamid, N,N-Bis(hydroxyalkyl)methacrylamid, Alkylvinylketon, Vinyl-, Allyl-, Methallyl-, 2-Allyloxyäthan-, 2-Hydroxy-3-allyloxypropan, Vinylbenzol-, Vinyloxybenzolsulfonsäure, Styrol oder Alkylcrotonat, wobei jeder Alkylrest 1–5 Kohlenstofatome aufweist, hergestellt worden ist. Die Molekulargewichtsbereiche variieren entsprechend dem Typ des eingesetzten Acrylnitrilpolymerisates bzw. Copolymerisates und sollten im Bereich von 50.000 bis 5.000.000, vorzugsweise zwischen 100.000 und 3.000.000, liegen.

Der zweite Bestandteil zur Herstellung des Aminpolymerisates besteht aus 0,6–3,0 Moläquivalenten, pro Moläquivalent an in dem Polymerisat a) vorhandenen Nitrilgruppen, eines Aminierungsmittels b) aus der Gruppe der Polyamine, vorzugsweise Ethylendiamin.

Als dritte Komponente zur Herstellung des Aminopolymerisates sollten 0,5–10 Moläquivalente, pro Moläquivalent an Nitrilgruppen des Polymerisates a), eines hoch siedenden Alkohols, mit einem Siedepunkt oberhalb 95°C, aus der Gruppe $C_nH_{2n+1}OH$, mit n = 3–30, vorzugsweise n = 6–10, wie beispielsweise 1-Propanol, 1-Butanol, 2-Butanol, 1-Pentanol, 2-Pentanol, 3-Pentanol, 1-Hexanol, 2-Hexanol, 3-Hexanol, 1-Heptanol, 2-Heptanol, 3-Heptanol, 4-Heptanol, 1-Octanol, 1-Dodecanol, Benzylalkohol, sowie Polyole, wie z.B. Ethylenglykol, Diethylenglykol, Triethylenglykol, Polyethylenglykol, 1,2-Propandiol, 1,3-Propandiol, 1,2-Butandiol, 1,3-Butandiol, 1,4-Butandiol, 2,3-Butandiol, 1,4-Pentandiol, 2,3-Pentandiol, 2,4-Pentandiol, 1,2-Hexandiol, 1,5-Hexandiol, 1,6-Hexandiol, 2,3-Hexandiol, 2,5-Hexandiol, 1,4-Dimethylolcyclohexan, Glycerin, 1,2,4-Butantriol, Pentaerythrit, Neopentylglykol, Trimethylolpropan, vorzugweise Ethylenglykol, verwendet werden. Diese Aufzählung gibt nur einen exemplarischen Teil aus der Vielfalt der möglichen Alkohole wieder. Ebenso können Mischungen derartiger Alkohole zur Anwendung gelangen.

Der als vierter Bestandteil zur Herstellung des Aminopolymerisates verwendete Schwefelaktivator wird aus einem großen Bereich von schwefelhaltigen Verbindungen ausgewählt. Er sollte 0,5 bis 10 Mol.-%, bezogen auf das Polymerisat a), eines Schwefelaktivators aus der Gruppe Schwefel, Schwefelwasserstoff oder eine Organoschwefelverbindung mit wenigstens einer Mercapto-, Thiocarbonyl-, Thioamid- oder Thiocarbonsäuregruppe, Schwefelchloriden, Polysulfiden oder Phosphorpentalsulfid enthalten, bevorzugt sind 5–10 Mol.-% an elementarem Schwefel enthalten, höhere Anteile sind gleichwohl möglich.

Gemäß einer allgemeinen Reaktionsweise werden das Nitrilpolymerisat, das Aminierungsmittel, die Alkoholkomponente und der Schwefelaktivator, drucklos oder unter Druck, für etwa 10 Minuten bis 6 Stunden, vorzugsweise 2 bis 3 Stunden, auf eine Temperatur von 100–180°C, bevorzugt auf 130–160°C, bis zum Erreichen des gewünschten K-Wertes von 20–40 erhitzt. Zur gleichmäßigeren Verteilung des Schwefelaktivators kann es von Vorteil sein, diesen vor der Vereinigung sämtlicher Reaktionskomponenten bei 20–60°C im Aminierungsmittel bzw. einem Teil des Aminierungsmittels zu lösen. Das während der Kondensationsreaktion gebildete Aminpolymerisat wird frühestens beim ersten Auftreten von vollständiger Wasserlöslichkeit mit Wasser oder einem Gemisch aus Wasser und einem mit Wasser mischbaren organischen Lösemittel versetzt und anschließend 10–90 Minuten bei 70–100°C, vorzugsweise 20–40 Minuten bei 80–90°C, gehalten. Die optimalen Reaktionsparameter müssen je nach Ansatzgröße und Bedingungen anhand von Versuchsreihen neu bestimmt werden.

Sollte für gewisse Anwendungen, wie beispielsweise bei der Anwendung in Salzform, ein vollständig sulfidfreies Produkt erforderlich sein, kann dies in bekannter Weise, beispielsweise durch Abtrennung der Schwefelverbindungen als Eisensulfid, oder durch Umsetzung mit wenigstens der dem Katalysatorgehalt äquimolaren Menge an H₂O₂, vorzugsweise der 3fach molaren Menge an H₂O₂, erhalten werden.

Gegebenenfalls kann das Aminpolymerisat in Form der freien Base in ein Salz einer anorganischen Säure oder einer organischen Säure, nach auf dem Fachgebiet an sich bekannten Methoden, umgewandelt werden. Für die Salzbildung geeignete Mineralsäuren umfassen u.a. Salzsäure, Bromwasserstoffsäure, Jodwasserstoffsäure, Sulfonsäuren, schweflige Säure, Schwefelsäure, phosphorige Säure, Phosphorsäure und Phosphonsäuren. Zur Salzbildung geeignete organische Säuren umfassen u.a. Ameisensäure, Essigsäure, Oxalsäure, Weinsäure, Zitronensäure, Glykolsäure, Propionsäure, Buttersäure, Isobuttersäure, Benzoesäure und p-Toluolsulfonsäure, besonders bevorzugt ist Essigsäure.

Zur Herstellung eines Salzes einer Mineralsäure oder einer organischen Säure wird eine einfache Säure-Base-Neutralisation durchgeführt. Das Aminpolymerisat in Form der freien Base wird bei Bedarf in einem geeigneten Lösemittel aufgelöst und mit einer Säuremenge, welche äquivalent oder überschläglich zu der Anzahl der Äquivalente an vorhandenen Amingruppen ist, neutralisiert, oder umgekehrt. Das Salz kann dann bei Bedarf ausgefällt oder in anderer Weise aus dem Lösemittelsystem entfernt werden. Sollen Ausfällungen vermieden werden, ist es ratsam, das entstandene Sulfid mittels dem Fachmann bekannter Methoden, beispielsweise durch Fällung oder Oxidation, zu entfernen. Ebenfalls kann es direkt zur Anwendung gebracht werden.

Das Verfahren der EP-A 175 202 besteht aus bestimmten Reaktionsbedingungen, welche neben der chemischen Struktur auch die physikalischen Eigenschaften der Aminpolymerisate bestimmen. Katalysatormengen oberhalb 3,5 Mol.-%, bezogen auf das eingesetzte Polyacrylnitrilpolymerisat, verkürzen die Reaktionszeit auffallend stark und begünstigen damit die für die Verwendung als Lederhilfsstoff erwünschte Kettenverkürzung. Es ist bekannt, daß erhöhte Temperatur, große Scherkräfte und lange Reaktionszeiten zu einer Verkürzung der Polymerkettenlänge führen. Andererseits sind Polyamine aufgrund ihrer Multifunktionalität zu Reaktionen unter intermolekularer Kettenverknüpfung befähigt. Ob der Kettenabbau oder die Kettenverlängerung überwiegt, hängt also in hohem Maße von den verwendeten Reaktionsbedingungen ab. Die Reaktionstemperatur und Reaktionsdauer müssen deshalb derart aufeinander abgestimmt werden, daß ein gezielter Abbau der Polymerkette bis zu dem gewünschten K-Wert erfolgt. Bevorzugt sind eine Produkttemperatur von 130–160°C bei einer Reaktionsdauer von 2–3 Stunden.

Aufgrund der einfachen Durchführbarkeit eignet sich dieses Verfahren besonders gut zur Wiederverwertung der, beispielsweise während der Polyacrylnitrilherstellung anfallenden, Abfallpolymerisate. Diese Polyacrylnitrilabfälle müßten ansonsten mittels aufwendiger Verfahren durch Verbrennung, mit anschließender Absorption der dabei auftretenden giftigen Gase, wie beispielsweise nitrosen Gasen oder Blausäure, entsorgt werden.

Das Polymerisat wird durch den K-Wert (Eigenviskosität) nach H. Fikentscher, Cellulosechemie 13, S. 58–64 sowie 71–74 (1932) in Dimethylformamid (für das eingesetzte Acrylnitril-Polymerisat) bzw. 1 N Natriumnitrat-Lösung (für die erfindungsgemäß eingesetzten Polymerisate) bei 30°C bestimmt. Dabei bedeutet K – k x 1000 (s.o. S. 60).

Im folgenden soll anhand mehrerer Beispiele die Umsetzung von Polyacrylnitrilpolymeren zu wasserlöslichen kationischen Polymerlösungen beschrieben werden.

Weiterhin werden die Vorteile der Polyamidamine als wasserlösliche, kationische Polymere bei der Färbung von Leder an einigen Beispielen verdeutlicht.

Soweit die chemische Synthese beschrieben ist, bedeuten Prozentangaben Gewichtsprozente. Bei den das Färben von Leder betreffenden Beispielen sind die Gewichtsprozente jeweils auf das Falzgewicht des feuchten Leders bezogen. Wz bedeutet Warenzeichen.

## Beispiel 1

In einem 1 l Dreihalskolben mit KPG-Rührer und Rückflußkühler werden 0,32 g Schwefel in 33,0 g Ethylendiamin vorgelegt und unter Rühren mit 62,0 g Ethylenglykol vermengt. Anschließend werden 26,5 g Polyacrylnitrilfasern mit einem Gehalt von 3% Allylsulfonat und einem K-Wert von 81,3 zugegeben und das Gemisch auf eine Badtemperatur von 175°C erwärmt. Nach 2 Stunden bei 175°C wird das entstandene Produkt mit 451 ml Wasser versetzt und weitere 30 Minuten bei 85–90°C gehalten. Nach dem Abkühlen auf Raumtemperatur wird über ein 0,1 mm Sieb von ungelösten Partikeln abgetrennt.

Die Reaktion ergibt 565,1 g einer 10 %igen Polymerlösung mit einem K-Wert von 31,6 und einer Viskosität von 38,0 mPa.s. Die Ausbeute an wasserlöslichem Polymerprodukt beträgt 99,9%, bezogen auf eingesetzte Polyacrylnitrilfaser.

Beispiel 2

In einem 10 l Planschliffkolben mit Ankerrührer und Rückflußkühlung werden 6,4 g elementarer Schwefel in 661 g Ethylendiamin vorgelegt und unter Rühren mit 620 g Ethylenglykol vermengt. Anschließend werden 530 g Polyacrylnitrilfasern mit einem Gehalt von 3% Allylsulfonat und einem K-Wert von 81,3 zugegeben und das Gemisch auf eine Badtemperatur von 180°C erwärmt. Nach 135 Minuten bei 180°C wird das entstandene Produkt mit 9710 ml Wasser versetzt und weitere 30 Minuten bei 85–90°C gehalten. Nach dem Abkühlen auf Raumtemperatur wird über ein 0,1 mm Sieb von ungelösten Partikeln abgetrennt.

Die Reaktion ergibt 11,36 kg einer 10%igen Polymerlösung mit einem K-Wert von 30,7 und einer Viskosität von 35,2 mPa.s. Die Ausbeute an wasserlöslichem Polymerprodukt beträgt 97,7%, bezogen auf eingesetzte Polyacrylnitrilfaser.

Beispiel 3

In einem 1 l Dreihalskolben mit KPG-Rührer und Rückflußkühler werden 0,32 g Schwefel in 33,0 g Ethylendiamin vorgelegt und unter Rühren mit 31,0 g Ethylenglykol vermengt. Anschließend werden 26,5 g Polyacrylnitrilfasern mit einem Gehalt von 3% Allylsulfonat und einem K-Wert von 81,3 zugegeben und das Gemisch auf eine Badtemperatur von 175°C erwärmt. Nach 2 Stunden bei 175°C wird das entstandene Produkt mit 488 ml Wasser versetzt und weitere 30 Minuten bei 85–90°C gehalten. Nach dem Abkühlen auf Raumtemperatur wird über ein 0,1 mm Sieb von ungelösten Partikeln abgetrennt.

Die Reaktion ergibt 570,8 g einer 10%igen Polymerlösung mit einem K-Wert von 30,2 und einer Viskosität von 33,8 mPa.s. Die Ausbeute an wasserlöslichem Polymerprodukt beträgt 100%, bezogen auf eingesetzte Polyacrylnitrilfaser.

Beispiel 4

In einem 1 l Deihalskolben mit KPG-Rührer und Rückflußkühler werden 1,6 g Schwefel in 33,0 g Ethylendiamin vorgelegt und unter Rühren mit 31,0 g Ethylenglykol vermengt. Anschließend werden 26,5 g Polyacrylnitrilfasern mit einem Gehalt von 3% Allylsulfonat und einem K-Wert von 81,3 zugegeben und das Gemisch auf eine Badtemperatur von 145°C erwärmt. Nach 3 Stunden bei 145°C wird das entstandene Produkt mit 474 ml Wasser versetzt und weitere 30 Minuten bei 85–90°C gehalten. Nach dem Abkühlen auf Raumtemperatur wird über ein 0,1 mm Sieb von ungelösten Partikeln abgetrennt.

Die Reaktion ergibt 557,7 g einer 10%igen Polymerlösung mit einem K-Wert von 29,0 und einer Viskosität von 30,4 mPa.S. Die Ausbeute an wasserlöslichem Polymerprodukt beträgt 97,7%, bezogen auf eingesetzte Polyacrylnitrilfaser.

Beispiel 5

In einem 160 l Rührkessel mit Kondensation werden 3,0 kg Schwefel in 16,8 kg Ethylendiamin vorgelegt und unter Rühren mit 15,3 kg Ethylenglykol vermengt. Anschließend werden 13,5 kg Polyacrylnitrilfasern mit einem Gehalt von 3% Allylsulfonat und einem K-Wert von 81,3 zugegeben und das Gemisch auf eine Temperatur von 140°C erwärmt. Nach 3 Stunden bei dieser Temperatur wird das entstandene Produkt mit Wasser auf eine 10 %ige Lösung verdünnt und weitere 30 Minuten bei 85–90°C gehalten. Nach dem Abkühlen auf Raumtemperatur wird über ein 0,1 mm Sieb von ungelösten Partikeln abgetrennt.

Die Reaktion ergibt 310 kg einer 10%igen Polymerlösung mit einem K-Wert von 31,8 und einer Viskosität von 40,1 mPa.s. Die Ausbeute an wasserlöslichem Polymerprodukt beträgt 100%, bezogen auf eingesetzte Polyacrylnitrilfaser.

Beispiel 6 (Vergleich)

Kationisches, chromgegerbtes und auf 1,8 mm gefalztes wetblue-Leder wurde mit 300% Wasser von 45°C und 5% einer handelsüblichen, 35%igen, wäßrigen Lösung von Polyacrylat mit einem K-Wert nach Fikentscher von 23 in einer Gerbtrommel 1 Stunde lang gewalkt und dabei analog von Nachgerbungen anionisch umgeladen. Die Flotte wurde abgelassen und das nun anionisch nachbehandelte Leder wurde mit einer Waschflotte von 200% Wasser von 60°C versetzt und 10 Minuten gewalkt.

Danach wurde auch diese Flotte abgelassen. Die anschließende Färbung erfolgte in einer Flotte von 200% Wasser von 60°C, wobei 1% Farbstoff (CI acid brown 270) 1:20 in Wasser aufgelöst und gleichmäßig in die rotierende Gerbtrommel eingegeben wurde. Nach 20 Minuten Walkdauer wurden 7% eines handelsüblichen Lickergemisches zugegeben. Nach weiteren 20 Minuten Walkdauer wurden durch Zusatz von 1% Ameisensäure (85%ig, 1:5 verdünnt) der Farbstoff und die Fettstoffe während einer Walkdauer von 40 Minuten fixiert. Danach wurde das gefärbte Leder an der Luft getrocknet, mechanisch aufbereitet und einer Messung der Farbtiefe mittels Elrepho-Gerät (Wz der Fa. Zeiss, Y-Filter) unterzogen. EW = 11,0.

Der gemessene Zahlenwert sagt aus, daß eine Oberflächenfärbung um so intensiver ist, je niedriger der gemessene Elrepho-Wert (EW) ist. Damit ein absoluter Vergleich gewährleistet ist, wurde in den Beispielen 5–11 immer die gleiche Ware aus einer Haut stammend verwendet, sowie alle anderen Bedingungen, Substanzen, Begleitarbeiten und Einstellungen mit Ausnahme der kationischen Hilfsmittel gleichgehalten.

Beispiel 7

Analog dem Beispiel 6 wurde Chromleder mit Polyacrylat anionisch behandelt. Nach dem Spülen wurde nun eine kationische Umladung mit Polyamidaminen, erhalten nach den Beispielen 1–5, in erfindungsgemäßer Weise vollzogen, indem die gespülten Leder mit 200% Wasser von 60°C und 0,2% Wirksubstanz erfindungsgemäßer Polyamidamine versetzt und 30 Minuten gewalkt wurden. Nach dieser Umladung erfolgte die Zugabe des gelösten Farbstoffes, das Lickern und auch das Fixieren mit Ameisensäure, obwohl der Farbstoff und die Fettstoffe so gut ausgezehrt und fixiert waren, daß auf die Zugabe von Ameisensäure hätte verzichtet werden können. Die Zugabe erfolgte zur Aufrechterhaltung des Anspruches der absolut gleichen Behandlung. Das Leder wurde fertiggestellt und mit dem Elrepho gemessen. EW = 3,3.

Beispiel 8 (Vergleich)

Es wurde analog Beispiel 7 verfahren, mit dem einzigen Unterschied, daß das Leder statt mit erfindungsgemäßen Polyamidaminen nun mit 0,2% Wirkstoff eines handelsüblichen Produktes* auf Basis Dicyandiamid-Formaldehy-Harz behandelt wurde. EW = 6,1.
* «Retingan R 4 B» (WZ der Fa. Bayer) Pulver, ca. 97,5%ig.

Beispiel 9 (Vergleich)

Analog Beispiel 7 wurde zur kationischen Behandlung 0,2% Wirkstoff eines handelsüblichen Produktes* auf Basis polyquaternäres Amin-Äthylenoxid-Addukt angewendet. EW = 6,1.
* «Invaderm S», (Wz der Fa. Ciba-Geigy) Flüssigprodukt, ca. 25%ig.

Beispiel 10

Analog Beispiel 7 wurde zur kationischen Behandlung 0,2% Wirkstoff eines handelsüblichen Produktes auf Basis Harnstoff-Formaldehyd-Kondensationsprodukt* angewendet. EW = 4,1.
* «Bastamol B», (Wz der Fa. BASF) Pulver, 100%ig.

Beispiel 11 (Vergleich)

Analog Beispiel 7 wurde zur kationischen Behandlung 0,2% Wirkstoff eines handelsüblichen Produktes auf Basis Kondensationsprodukt von Cyanamidderivaten und Formaldehyd* angewendet. EW = 4,2.
* «Levogen HW» (Wz der Fa. Bayer), Flüssigprodukt, ca. 48%ig.

**Tabelle**

Oberflächenfärbung von Leder in Abhängigkeit vom Färbeverfahren

| Versuch | Wirkstoff | EW |
|---|---|---|
| a) | Kontrolle ohne Wirkstoff | 11,0 |
| b) | Polyamidamine (Beispiel 7) | 3,1–3,3 |
| c) | Dicyandiamid-Formaldehyd-Harze (Beispiel 8) | 6,1 |
| d) | polyquarternäres Amin-Ethylenoxid-Addukt (Beispiel 9) | 6,1 |
| e) | Harnstoff-Formaldehyd-Kondensationsprodukt (Beispiel 10) | 4,1 |
| f) | Cyanamidderivat-Formaldehyd-Kondensationsprodukt (Beispiel 11) | 4,2 |

Die Versuche a) und c) – f) dienen zum Vergleich.

Bei der Bewertung der EW-Zahlen darf nicht etwa ein proportionaler Maßstab angelegt werden. Je niedriger der EW ist, umso tiefer ist zwar die Färbung, jedoch entspricht eine Veränderung eines Zahlenwertes im unteren Bereich einer wesentlich größeren Intensitätsdifferenz als die Veränderung des Zahlenwertes im oberen Bereich. So ist schon deutlich ein Unterschied zwischen einer Färbung mit dem EW 3,3 und dem EW 3,4 bei Betrachtung der Lederoberfläche zu erkennen, der etwa einem Unterschied zwischen EW 10,0 und EW 11,0 entspricht.

Beispiel 12 (Vergleich)

Mit Chromgerbstoff gegerbte und mit Mimosagerbstoff pflanzlich nachgegerbte und getrocknete Ziegenfelle werden als Lederzwischenprodukte unter der Bezeichnung Chromosa-Ziegenfelle gehandelt und dienen diversen Gerbereien als Ausgangsware zur Lederherstellung.

Ein Chromosa-Ziegenfell wurde halbiert und die eine Hälfte mit 500% Wasser (alle folgenden Prozentangaben sind auf Trockengewicht des Leders bezogen) von 40°C während einer Walkdauer von 1 Std. in einer Gerbtrommel homogen aufgeweicht.

Nachdem die Weichflotte abgelassen wurde, erfolgte die Färbung in einem frischen Bad von 100% Wasser von 40°C durch pulverförmige Zugabe von 5% eines handelsüblichen Lederfarbstoffes vom Farbton Grau in die Gerbtrommel. Danach wurden 200% Wasser von 60°C und 9% eines Gemisches handelsüblicher Licker zugegeben und 30 Minuten gewalkt. Die Fixierung des Farbstoffes und der Fettstoffe erfolgt durch Zugabe von 2% Ameisensäure (1:5 mit Wasser verdünnt) während einer Walkdauer von 40 Minuten. Dabei wurde ein für diesen Verfahrensabschnitt üblicher pH-Wert von 3,7 erreicht. Trotzdem war die Flotte sehr schlecht ausgezehrt.

Das Leder wurde mit 500% Wasser von 20°C während einer Walkdauer von 15 Min. gewaschen, von der Flotte freigepreßt und anschließend an der Luft getrocknet. Nach der mechanischen Aufbereitung des Leders wurde die Narbenseite und die Spaltseite des Leders (Velourseite) mit dem Elrepho gemesssen.

EW Narbenseite = 14,5
EW Velourseite = 11,5.

Beispiel 13

Die andere, noch unbehandelte, Hälfte des Chromosa-Ziegenfelles aus Beispiel 12 wurde ebenso geweicht, die Weichflotte wurde abgelassen. Danach wurde das Leder in einer neuen Flotte von 100% Wasser von 40°C mit 0,2% Wirkstoff gemäß Beispiel 1 während einer Walkdauer von 30 Minuten behandelt. Danach wurde, wie in Beispiel 12, die gleiche Menge des gleichen Farbstoffes zugesetzt und der absoluten Analogie wegen alle anderen Verfahrensschritte einschließlich Fixierung durchgeführt. Die Flotte war gut ausgezehrt.

EW Narbenseite = 5,8
EW Velourseite = 7,6.

Beispiel 14 (Vergleich)

Ein Chromosa-Ziegenfell wurde halbiert und die eine Hälfte in einer Gerbtrommel mit 500% Wasser von 40°C während einer Walkdauer von 1 Stunde aufgeweicht. Danach wurde die Weichflotte abgelassen. Einer neuen Flotte von 100% Wasser von 40°C wurden 5% einer Mischung handelsüblicher Lederfarbstoffe pulverförmig hinzugefügt und 30 Minuten gewalkt.

Danach wurden 200% Wasser von 60°C und 9% einer Mischung handelsüblicher Licker zugesetzt und weitere 30 Minuten gewalkt. Zur Auszehrung und Fixierung der Fett- und Farbstoffe mußten nun 2% Ameisensäure 85%ig (1:5 mit Wasser verdünnt) zugesetzt und 40 Minuten gewalkt werden. Diese Flotte wurde abgelassen und das Leder in einer frischen Flotte von 500% Wasser bei 20°C während einer Walkdauer von 15 Minuten gewaschen. Nach Trocknung und mechanischer Aufbereitung des Leders wurde die Oberfläche mit dem Elrepho gemessen.

EW Narbenseite = 15,6
EW Fleischseite = 10,8

Beispiel 15

Die andere, noch unbehandelte Hauthälfte aus Beispiel 14 wurde ebenso geweicht, die Weichflotte wurde abgelassen. Danach wurde das Leder in einer neuen Flotte von 100% Wasser von 40°C mit 0,2% Wirkstoff erfindungsgemäßer Polyamidamine während einer Walkdauer von 30 Minuten behandelt. Danach wurde ein Fünftel der Menge (= 1%) der Farbstoffmischung aus Beispiel 14 pulverförmig zugesetzt und wie in Beispiel 14 gewalkt und gelickert.

Sowohl die Farb- sowie die Festtstoffe waren derart gut ausgezehrt, daß auf eine zusätzliche Fixierung mit Ameisensäure hätte verzichtet werden können. Der Analogie wegen wurde das Leder jedoch exakt wie in Beispiel 14 fertiggestellt.

EW Narbenseite= 14,5
EW Velourseite = 7,3

Beim Vergleich der EW zeigt sich, daß trotz Reduzierung der Farbstoffmenge um 80% sowohl die Narbenseite wie die Velourseite von mit erfindungsgemäß mit Polyamidaminen behandeltem Leder dunkler gefärbt ist. Zur großen Überraschung konnte auch registriert werden, daß diese geringe Farbstoffmenge trotz intensiven Farbtons absolut homogen verteilt wurde.

**Patentansprüche**

1. Verfahren zum Färben von Ledern, dadurch gekennzeichnet, daß die zu färbenden Leder vor, und/oder während, und/oder nach der Färbung mit Polyamidaminen behandelt werden, welche durch Kondensation von Polyacrylnitril oder Polyacrylnitrilcopolymerisaten aus mindestens 20% Acrylnitril und bis zum 80% eines Acrylsäurederivates oder einer copolymerisierbaren Vinylverbindung mit einem oder mehreren Polyaminen in Gegenwart eines schwefelhaltigen Katalysators bei Temperaturen von 100–160°C, wobei man die Umsetzung in Gegenwart eines Alkohols oder Polyols mit einem Siedepunkt von über 95°C durchführt und das Reaktionsprodukt anschließend mit Wasser oder einem Gemisch aus Wasser und einem mit Wasser mischbaren organischen Lösemittel bei Temperaturen von 70–100°C behandelt, erhältlich sind.

2. Verfahren nach Anspruch 1, dadurch gekennzeichnet, daß Polyamidamine die einen K-Wert von 20–45 (gemessen in 1N Natriumnitrat-Lösung bei 30°C) aufweisen und in Gegenwart von 0,5–10 Moläquivalenten Polyol bezogen auf die Nitrilgruppen des Polyacrylnitrils hergestellt wurden, verwendet werden.

3. Verfahren nach Ansprüchen 1 oder 2, dadurch gekennzeichnet, daß die zu färbenden Leder in wäßrigen Flotten mit 0,01–1% Polyamidamin bezogen auf Ledergewicht vorliegen.

4. Verfahren nach Anspruch 3, dadurch gekennzeichnet, daß die zu färbenden Leder in wäßrigen Flotten mit 0,1–0,5% Polyamidamin behandelt werden.

5. Verfahren nach einem der Ansprüche 1–4, dadurch gekennzeichnet, daß die Behandlungsflotten und die darin enthaltenen Leder Temperaturen von 20–70°C und pH-Werte von pH 4–9 aufweisen.

**Claims**

1. Process for the dyeing of leathers, characterised in that the leathers to be dyed are treated before and/or during and/or after the dyeing with polyamide amines which are obtainable by condensation of polyacrylonitrile or polyacrylonitrile co-polymers of at least 20% acrylonitrile and up to 80% of an acrylic acid derivative or of a co-polymerisable vinyl compound with one or more polyamines in the presence of a sulphur-containing catalyst at temperatures of 100–160°C, whereby one carries out the reaction in the presence of an alcohol or polyol with a boiling point of over 95°C and subsequently treats the reaction product with water or with a mixture of water and an organic solvent miscible with water at temperatures of 70–100°C.

2. Process according to claim 1, characterised in that polyamide amines are used which have a K value of 20–45, measured in 1N sodium nitrate solution at 30°C, and have been produced in the presence of 0.5–10 mole equivalents of polyol, referred to the nitrile groups of the polyacrylonitrile.

3. Process according to claims 1 or 2, characterised in that the leathers to be dyed are present in aqueous baths with 0.01–1% of polyamide amine, referred to the weight of the leather.

4. Process according to claim 3, characterised in that the leathers to be dyed are treated in aqueous baths with 0.1–5% polyamide amine.

5. Process according to one of claims 1–4, characterised in that the treatment baths and the leathers contained therein have temperatures of 20–70°C and pH values of 4–9.

**Revendications**

1. Procédé de teinture de cuirs, caractérisé en ce que les cuirs à teindre sont, avant et/ou pendant et/ou après la teinture, traités avec des polyamideamines qui peuvent être obtenues par condensation de polyacrylonitrile ou de copolymères de polyacrylonitrile à base d'au moins 20% d'acrylonitrile et de jusqu'à 80% d'un dérivé d'acide acrylique ou d'un composé vinylique copolymérisable, avec une ou plusieurs polyamines, en présence d'un catalyseur contenant du soufre, à des températures de 100 à 160°C, la réaction étant effectuée en présence d'un alcool ou d'un polyol ayant un point d'ébullition supérieur à 95°C, le produit réactionnel étant ensuite traité avec de l'eau ou avec un mélange d'eau et d'un solvant organique miscible à l'eau à des températures de 70 à 100°C.

2. Procédé suivant la revendication 1, caractérisé en ce qu'on utilise des polyamideamines qui présentent une valeur K de 20 à 45, mesurée dans une solution de nitrate de sodium 1 N à 30°C, et qui sont préparées en présence de 0,5 à 10 équivalents molaires de polyol par rapport aux groupes nitrile du polyacrylonitrile.

3. Procédé suivant l'une des revendications 1 et 2, caractérisé en ce que les cuirs à teindre se trouvent dans des bains aqueux avec 0,01 à 1% de polyamideamine par rapport au poids de cuir.

4. Procédé suivant la revendication 3, caractérisé en ce que les cuirs à teindre sont traités dans des bains aqueux avec 0,1 à 0,5% de polyamideamine.

5. Procédé suivant l'une des revendications 1 à 4, caractérisé en ce que les bains de traitement et le cuirs contenus dedans présentent des températures de 20 à 70°C et des valeurs de pH de 4–9.